(19) Europäisches Patentamt / European Patent Office / Office européen des brevets

(11) **EP 4 270 814 A1**

(12) **EUROPEAN PATENT APPLICATION**

(43) Date of publication:
**01.11.2023 Bulletin 2023/44**

(21) Application number: **23169399.5**

(22) Date of filing: **24.04.2023**

(51) International Patent Classification (IPC):
**H04B 7/155** (2006.01)    **H04B 7/06** (2006.01)
**H04B 7/08** (2006.01)

(52) Cooperative Patent Classification (CPC):
**H04B 7/15528;** H04B 7/0695; H04B 7/088;
H04B 7/15542

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.04.2022  KR 20220051082**
**14.04.2023  KR 20230049202**

(71) Applicant: **KT Corporation**
**Seongnam-si, Gyeonggi-do 13606 (KR)**

(72) Inventor: **Park, Kyujin**
**13606 Seongnam-si Gyeonggi-do (KR)**

(74) Representative: **BCKIP Part mbB**
**Siegfriedstraße 8**
**80803 München (DE)**

(54) **METHOD AND APPARATUS FOR TRANSCEIVING BEAM CONTROL INFORMATION OF REPEATER IN MOBILE COMMUNICATION SYSTEM**

(57)    Disclosed are a method and apparatus for communication and/or controlling between a base station, a repeater, and a UE in a wireless communication system. The UE performs downlink reception using a downlink beam on a first link between the UE and the repeater, and performs uplink transmission using an uplink beam on the first link, in which the downlink beam and the uplink beam are associated with each other by identification information for identifying the downlink beam and the uplink beam, and the identification information is configured by side control information from a base station through a second link between the repeater and the base station.

FIG. 9

EP 4 270 814 A1

**Description**

**CROSS-REFERENCE TO RELATED THE APPLICATION**

This application is based on and claims priority to Patent Application No. 10-2022-0051082 filed on Apr. 25, 2022 and No. 10-2023-0049202 filed on Apr. 14, 2023 in the Korean Intellectual Property Office.

**BACKGROUND**

Technical Field

The present disclosure relates to a $5^{th}$ generation new radio (5G NR) system based on a $3^{rd}$ generation partnership project.

Description of the Related Art

As more communication devices require greater communication traffic, necessity for a next generation 5G system corresponding to mobile broadband communication, which is enhanced compared to a legacy LTE system, is emerging. In the next generation 5G system, scenarios can be classified into Enhanced Mobile BroadBand (eMBB), Ultra-reliability and low-latency communication (URLLC), Massive Machine-Type Communications (mMTC), and the like.
Here, the eMBB corresponds to a next generation mobile communication scenario having such a characteristic as high spectrum efficiency, high user experienced data rate, high peak data rate, and the like, the URLLC corresponds to a next generation mobile communication scenario having such a characteristic as ultra-reliable, ultra-low latency, ultra-high availability, and the like (e.g., V2X, Emergency Service, Remote Control), and the mMTC corresponds to a next generation mobile communication scenario having such a characteristic as low cost, low energy, short packet, and massive connectivity (e.g., IoT).

SUMMARY

The disclosure is to provide a method and apparatus for a user equipment (UE) to communicate with a repeater in a mobile communication system, and also provide a method and apparatus for a base station to control the repeater.
According to an embodiment of the disclosure, a UE in a mobile communication system performs downlink reception using a downlink beam on a first link between the UE and the repeater, and performs uplink transmission using an uplink beam on the first link, in which the downlink beam and the uplink beam are associated with each other by identification information for identifying the downlink beam and the uplink beam, and the identification information is configured by side control information from a base station through a second link between the repeater and the base station.
Further, according to the disclosure, the base station in the mobile communication system configures side control information (SCI) for the repeater, and transmits the configured SCI to the repeater through a control link, in which the SCI includes identification information for identifying a downlink beam and an uplink beam.
The identification information may be beam index information, and the beam index information may be same for both the downlink beam and the uplink beam.
In addition, the downlink beam and the uplink beam may be associated by being paired each other.
The side control information may further include time resource assignment information related to at least one of the downlink beam and the uplink beam, the time resource assignment information may include offset information and duration information, and the offset information and the duration information may be related to at least one of a slot and a symbol.
The time resource assignment information may be based on a time resource list.
Further, the side control information may indicate ON/OFF of the repeater.

BRIEF DESCRIPTION OF THE DRAWINGS

FIG. 1 illustrates a mobile communication system.

FIG. 2 illustrates a structure of a radio frame used in NR.

FIGS. 3A to 3C illustrate exemplary architectures for a mobile communication service.

FIG. 4 illustrates a slot structure of a new radio (NR) frame.

FIG. 5 shows an example of a subframe type in NR.

FIG. 6 illustrates a structure of a self-contained slot.

FIG. 7 shows an example of a repeater applied to the disclosure.

FIGS. 8A and 8B show other examples of a repeater applied to the disclosure.

FIG. 9 illustrates operations of a base station, a repeater and a user equipment (UE) according to an embodiment of the disclosure.

FIG. 10 shows apparatuses according to an embodiment of the disclosure.

FIG. 11 is a block diagram showing a configuration of a UE according to an embodiment of the disclosure.

FIG. 12 is a configuration block diagram of a processor in which the disclosure is implemented.

FIG. 13 is a detailed block diagram of a transceiver of a first apparatus shown in FIG. 10 or a transceiving unit of an apparatus shown in FIG. 11.

DETAILED DESCRIPTION

The technical terms used herein are used to merely describe specific embodiments and should not be construed as limiting the disclosure. Further, the technical terms used herein should be, unless defined otherwise, interpreted as having meanings generally understood by those skilled in the art but not too broadly or too narrowly. Further, the technical terms used herein, which are determined not to exactly represent the spirit of the disclosure, should be replaced by or understood by such technical terms as being able to be exactly understood by those skilled in the art. Further, the general terms used herein should be interpreted in the context as defined in the dictionary, but not in an excessively narrowed manner.

The expression of the singular number in the disclosure includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the disclosure, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts which are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features individually described in one drawing in this specification may be implemented separately or at the same time.

In the accompanying drawings, user equipment (UE) is illustrated by way of example, but the illustrated UE may be referred to as a terminal, mobile equipment (ME), and the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (eg, a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), the repeater(relay), and so on.

Although embodiments of the disclosure will be described based on an LTE system, an LTE-advanced (LTE-A) system, and an NR system, such embodiments may be applied to any communication system corresponding to the aforementioned definition.

## <Mobile Communication System>

With the success of long term evolution (LTE)/LTE-A (LTE-Advanced) for the 4th generation mobile communication, the next generation, i.e., 5th generation (so called 5G) mobile communication has been commercialized and the follow-up studies are also ongoing.

The 5th generation mobile communications defined by the International Telecommunication Union (ITU) refers to communication providing a data transmission rate of up to 20 Gbps and an actual minimum transmission rate of at least 100 Mbps anywhere. The official name of the 5th generation mobile telecommunications is 'IMT-2020.'

The ITU proposes three usage scenarios, for example, enhanced Mobile Broadband (eMBB), massive Machine Type Communication (mMTC) and Ultra Reliable and Low Latency Communications (URLLC).

The URLLC relates to a usage scenario requiring high reliability and low latency. For example, services such as automatic driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and lower battery consumption than a 4G mobile communication system to better implement the Internet of things. A new radio access technology (new RAT or NR) may be proposed for such 5G mobile communication.

An NR frequency band is defined as frequency ranges of two types FR1 and FR2. The numerical value in each frequency range may be changed, and the frequency ranges of the two types FR1 and FR2 may for example be shown in Table 1 below. For convenience of description, the FR1 between the frequency ranges used in the NR system may refer to a Sub-6 GHz range, and the FR2 may refer to an above-6 GHz range, which may be called millimeter waves (mmWs).

[Table 1]

| Frequency Range designation | Corresponding frequency range | Subcarrier Spacing |
|---|---|---|
| FR1 | 410MHz - 7125MHz | 15, 30, 60kHz |

(continued)

| Frequency Range designation | Corresponding frequency range | Subcarrier Spacing |
|---|---|---|
| FR2 | 24250MHz - 52600MHz | 60, 120, 240kHz |

The numerical values in the frequency range may be changed in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, for example, vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs which do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An RS, also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

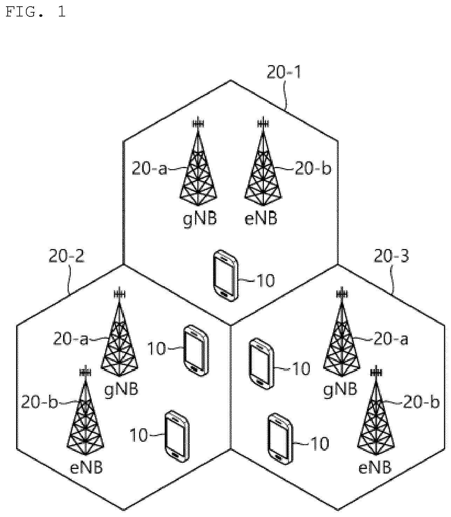

**FIG. 1 illustrates a mobile communication system.**

As can be seen with reference to FIG. 1, the mobile communication system includes at least one base station (BS). The BS is divided into a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A UE typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be simultaneously performed. In a TDD system in which uplink transmission and downlink transmission are divided in subframe units, uplink transmission and downlink transmission are performed in different subframes.

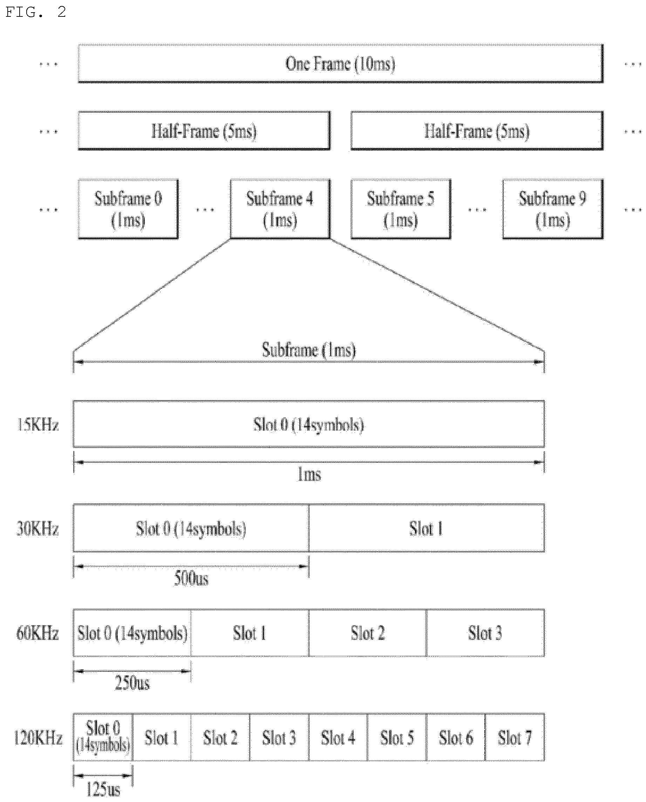

**FIG. 2 illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

## <Support of Various Numerologies>

With the development of wireless communication technology, a plurality of numerologies may be provided to UEs in the NR system. For example, in the case where a subcarrier spacing (SCS) is 15 kHz, a wide area of the conventional cellular bands is supported, and, in the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a SCS. One cell can provide a plurality of numerologies to UEs. When an index of a numerology is represented by $\mu$, a subcarrier spacing and a corresponding CP length may be expressed as shown in the following table.

[Table 2]

| $\mu$ | $\Delta f = 2^{\mu} \cdot 15$ [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by $\mu$, the number of OLDM symbols per slot $N^{slot}_{symb}$, the number of slots per frame $N^{frame,\mu}_{slot}$, and the number of slots per subframe $N^{subframe,\mu}_{slot}$ are expressed as shown in the following table.

[Table 3]

| $\mu$ | $\Delta f = 2^{\mu} \cdot 15$ [kHz] | $N^{slot}_{symb}$ | $N^{frame,\mu}_{slot}$ | $N^{subframe,\mu}_{slot}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by $\mu$, the number of OLDM symbols per slot $N^{slot}_{symb}$, the number of slots per frame $N^{frame,\mu}_{slot}$, and the number of slots per subframe $N^{subframe,\mu}_{slot}$ are expressed as shown in the following table.

[Table 4]

| μ | SCS ($15 \times 2^u$) | $N^{slot}_{symb}$ | $N^{frame,\mu}_{slot}$ | $N^{subframe,\mu}_{slot}$ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

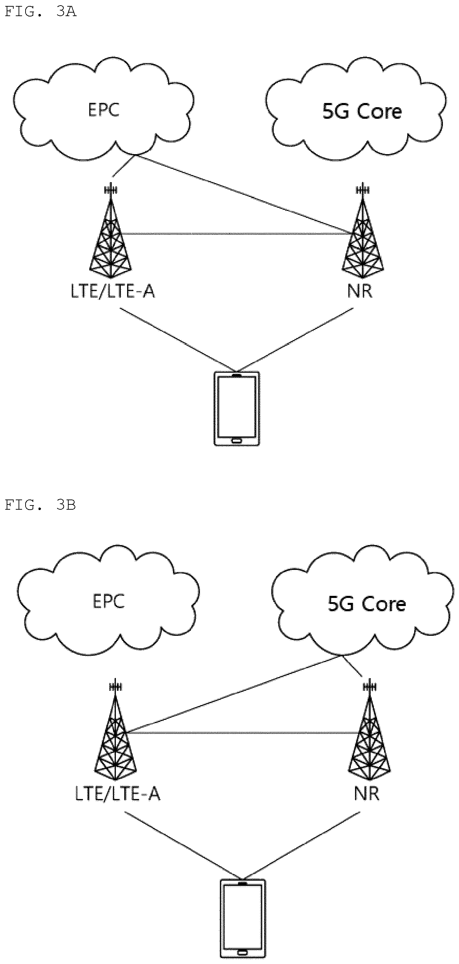

FIGS. 3A to 3C illustrate exemplary architectures for a mobile communication service.

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

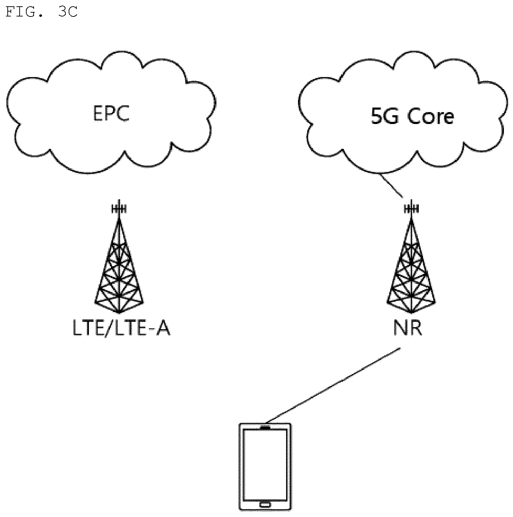

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to paired spectrums and not-paired spectrums. A pair of spectrums indicates including two subcarriers for downlink and uplink operations. For example, one subcarrier in one pair of spectrums may include a pair of a downlink band and an uplink band.

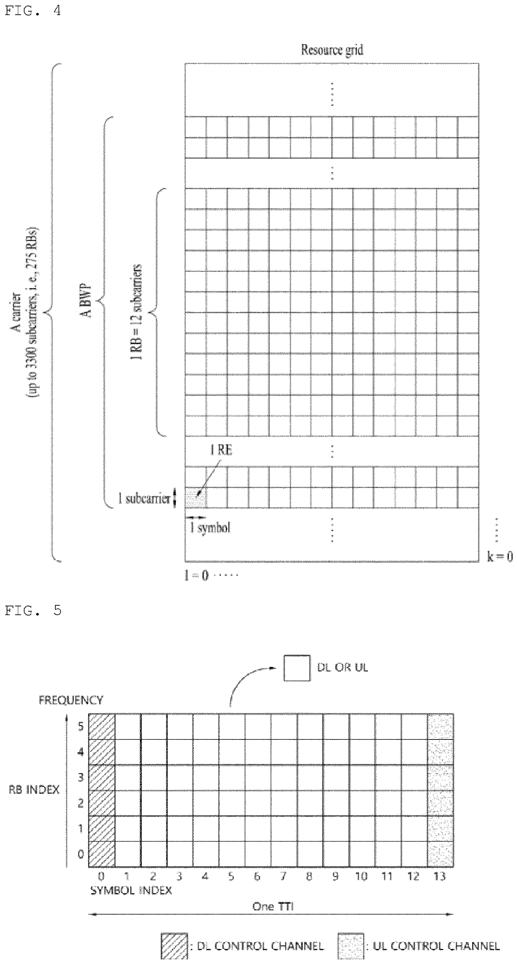

FIG. 4 illustrates a slot structure of an NR frame.

A slot includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in each of the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

FIG. 5 shows an example of a subframe type in NR.

A TTI (Transmission Time Interval) shown in FIG. 5 may be called a subframe or a slot for NR (or new RAT). The subframe (or slot) shown in FIG. 5 can be used in a TDD system of NR (or new RAT) in order to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as a DL control region) in a slot may be used to transmit a DL control channel, and the last M symbols (hereinafter referred to as a UL control region) in the slot may be used to transmit a UL control channel. N and M are integers greater than 0. A resource region between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception can be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

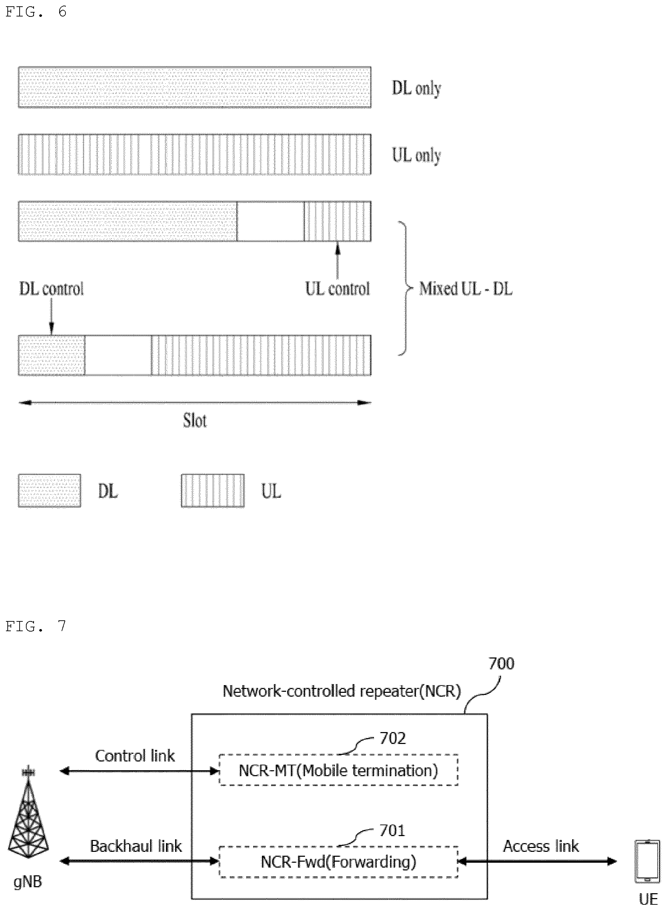

FIG. 6 illustrates a structure of a self-contained slot.

In the NR system, the frame has a self-contained structure, in which all of a DL control channel, DL or UL data channel, UL control channel, and so on are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource region between the DL control region and the UL control region (hereinafter referred to as a data region) may be used for DL data transmission or UL data transmission

For example, the following configurations may be taken into account. The durations are listed in temporal order.

    1. DL only configuration

    2. UL only configuration

    3. Mixed UL-DL configuration

    -

```
DL region + Guard Period (GP) + UL control region
```

    -

```
DL control region + GP + UL region
```

    DL region: (i) DL data region, (ii) DL control region + DL data region

    UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

FIG. 7 shows an example of a repeater applied to the disclosure.

The repeater applied to the disclosure may be a network-controlled repeater, and modeled as shown in FIG. 7. The network-controlled repeater (NCR) 700 may include an network-controlled repeater-mobile termination (NCR-MT) entity 702, and a network-controlled repeater-forwarding (NCR-Fwd) entity 701. The NCR-MT entity 702 may transceive control information by communicating with the base station (gNB) through a control link (C-link). For example, side control information for controlling the NCR-Fwd entity 701 may be transceived between the gNB and the NCR-MT entity 702. The control link (C-link) between the base station (gNB) and the NCR-MT entity 702 is based on an NR Uu interface between the UE and the base station (gNB).

The NCR-Fwd entity 701 is defined as a function entity that performs amplifying-and-forwarding an uplink and downlink radio frequency (RF) signal between the base station (gNB) and the UE through a backhaul link and an access link. The operations of the NCR-Fwd entity 701 may be controlled based on the side control information received from the base station (gNB).

Meanwhile, the NCR-MT entity 702 and the NCR-Fwd entity 701 may operate in the same frequency band, and at least one of carriers of the NCR-MT entity 702 needs to operate in a frequency band forwarded by the NCR-Fwd entity 701.

The control link (C-link) and the backhaul link are transceived by the network-controlled repeater 700 in such a manner that:

    i) the downlink transmission of the C-link and the downlink transmission of the backhaul link may be performed simultaneously or in a time division multiplexing (TDM) scheme (where, the downlink transmission refers to transmission from the base station to the NCR), and

    ii) the uplink transmission of the C-link and the uplink transmission of the backhaul link may be performed in a TDM scheme (where, the uplink transmission refers to transmission from the NCR to the base station).

The multiplexing is under control of the base station (gNB) in consideration of the capability of the network-controlled repeater 700, and the uplink transmission of the control link (C-link) and the uplink transmission of the backhaul link may also be performed simultaneously based on the capability of the network-controlled repeater 700.

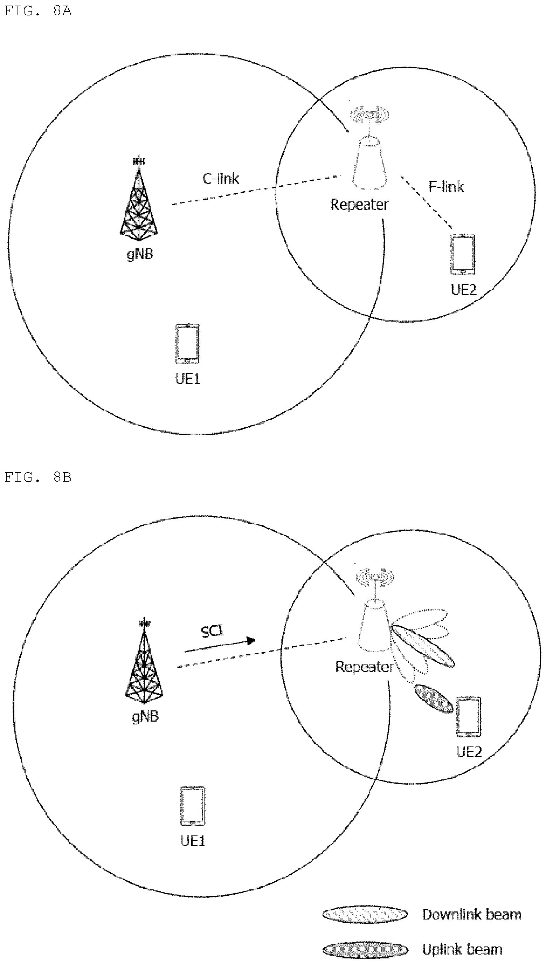

FIGS. 8A and 8B show other examples of a repeater applied to the disclosure.

When a base station and a repeater coexist in a mobile communication system, the repeater depends on the base station. The repeater may be classified according to the functions thereof, and may be largely divided into three types, such as a layer 1 (L1), a layer 2 (L2), and a layer 3 (L3). The L1, L2 and L3 repeaters are classified based on their functions and corresponding communication layers.

The L1 repeater has only a physical layer, and functions to amplify and forward only the power of a signal without performing a separate process, in particular, without decoding a received signal when data is received from the base station and relayed to a UE. Of course, even when a signal is relayed through the uplink, the signal received from the UE is relayed to the based station without being decoded, in which transmission power thereof is properly adjusted (that is, amplified) to relay the signal.

The L1 repeater is characterized in that the repeater does not decode the signal, thereby having an advantage of little or vary short time delay during communication between the base station and the UE through the repeater. In addition, functions are not specially added to the repeater, and therefore additional functions and signaling are hardly necessary when the UE communicates with the base station via the repeater, thereby having an advantage that the base station and the UE can perform a transparent operation with respect to the repeater. On the other hand, the signal received in the repeater actually includes not only an information signal but also a noise signal. Therefore, when the repeater simply amplifies and transmits the received signal, the noise signal is also amplified, thereby rather deteriorating the performance of the repeater.

The L2 repeater refers to a repeater that has functions of a physical layer and a link layer, in particular, a medium access control (MAC) layer among the link layers. The L2 repeater functions to decode and forward a received signal, and thus is also called a decode-and-forward (DF) repeater. Due to such a DF operation unlike the amplify-and-forward (AF) operation, when the repeater relays a received signal, the noise signal is not amplified and forwarded, and an adaptive modulation and coding (AMC) scheme is applicable even between the repeater and the UE, thereby having an advantage of improving the performance of the repeater. However, due to the decoding operation of the repeater, there is a disadvantage of much time delay during the communication using the repeater between the base station and the UE. The L2 repeater may have hybrid automatic request (HARQ) and scheduling functions. This means that the received signal is reconfigured when the repeater decodes the received signal and forwards the decoded signal, and a unique control channel of the repeater is generated and transmitted. The distinctive characteristic of the L2 repeater is that the repeater decodes and forwards the received signal, and the scheduling, HARQ, and the like functions may be configured according to cell configurations and system implementation. In other words, there may be the L2 repeater having an independent scheduler, but there may be the L2 repeater in which the base station has the scheduler and the repeater has no scheduler.

The L3 repeater refers to an access point most similar to the base station. The L3 repeater has a unique cell identifier (cell ID) like the base station, and therefore the UE can hardly distinguish between the base station and the L3 repeater.

Referring to FIG. 8A, the base station (gNB) and the repeater transceive control information through the control link (C-link), in which the control information may be the side control information (SCI) transmitted from the base station (gNB) to the repeater as shown in FIG. 8B.

**<Disclosure>**

For mobile coverage expansion, the repeater (for example, the foregoing L1 repeater) conventionally operates in such a way of receiving a signal of the base station or a signal of the UE and then simply amplifying and forwarding the received signal. Therefore, the repeater continues to receive, amplify, and forward the signal of the base station, regardless of the presence of the UE that actually needs help from that repeater. In other words, a repeater within a cell configured by the base station unconditionally relays a signal from the base station corresponding to a donor node thereof without considering the connection of the UE within the coverage of that repeater, optimizing (analog) transmission (Tx) of the optimal repeater based on the location of the connected UE/the state of the channel state, etc.

Such a conventional operation causes the repeater to not only wastefully consume energy but also unnecessarily interfere with other UEs within the corresponding cell.

Further, a cell/base station that operates in a highfrequency band, such as 5G frequency range 2 (FR2), employs a hybrid beamforming scheme that applies both analog beamforming technology and digital beamforming technology to the mobile coverage expansion. Accordingly, even the repeater selects the optimal Tx beam based on the location of the UE, the state of the channel, etc. for the transmission through the analog beamforming, thereby improving the coverage and data transceiving performance of that repeater.

The disclosure proposes a method by which the base station controls transmission beams (Tx beam) or reception beams (Rx beams) of a repeater when the repeater supports one or more analog Tx beams or Rx beams.

Below, the repeater refers to a network-controlled repeater (NCR) controllable by the base station/network.

According to the disclosure, a link between the base station and the repeater for the control of the repeater may be referred to as a control link (C-link). On the other hand, a link between the repeater and the UE for the repeater's own functions, i.e., amplifying and forwarding a downlink signal from the base station to the UE and amplifying an uplink signal from the UE to the base station may be referred to as a forwarding link (F-link). The forwarding link (F-link) may also be called an access link. Further, a backhaul link may be defined between the base station and the repeater. Through the backhaul link, the repeater may receive a downlink signal from the base station, and amplify an uplink signal received from the UE and transmit/forward the amplified signal to the base station.

An entity of the repeater that receives control information from the base station through the control link between the base station and the repeater and thus controls the on/off state or beam of the forwarding link or the backhaul link may be referred to as an NCR-MT entity. Further, an entity of the repeater that receives a downlink signal of the base station through the backhaul link and amplifies and forwards the downlink signal to the UE through the forwarding link, or conversely receives an uplink signal of the UE through the forwarding link and amplifies and forwards the uplink signal to the base station through the backhaul link may be referred to as an NCR-Fwd entity.

The base station may transmit the control information for the Tx beam or the Rx beam for a repeater to the repeater through the C-link. According to the disclosure, the corresponding base station's control information for the repeater may be referred to side control information (SCI).

Therefore, the following reception of the control information from the base station may mean that the repeater or the NCR-MT entity of the repeater receives downlink control information (DCI) transmitted from the base station through the PDCCH or receives the foregoing side control information (SCI) in an MAC CE message or RRC message transmitted through the PDSCH.

The repeater may configure the downlink transmission beam (DL Tx beam) for amplifying/forwarding the signal of the base station or the uplink reception beam (UL Rx beam) for receiving the uplink signal of the UE through the F-link (or the access link) based on the SCI received from the base station.

Below, a method of controlling the downlink transmission beam (DL Tx beam) or the uplink reception beam (UL Rx beam) for the F-link (or the access link) will be proposed. However, this method may also be used even when an original signal to be amplified/forwarded through the C-link control or the F-link (or the access link) is transceived between the base station and the repeater for the SCI transmission proposed according to the disclosure. Here, the backhaul link may also be used for the original signal to be amplified/forwarded between the base station and the repeater.

A repeater transmits information about the number of downlink transmission beams (DL Tx beams) supported in that repeater to the base station/network by capability (information) signaling (capability signaling) or pre-configured scheme. In this case, beam indexing is performed for each downlink transmission beam (DL Tx beam) according to the number of downlink transmission beams (DL Tx beams) supported in the repeater. In other words, when a repeater supports N downlink transmission beams (DL Tx beams), beam indexes (or beam ID) of 0, 1, 2, ... , N-1 may be respectively assigned to the downlink transmission beams (DL Tx beams) supported in that repeater.

However, the downlink transmission beams (DL Tx beams) supported in a repeater may be configured as classified into one or more types of downlink transmission beams (DL Tx beams) according to cast types. For example, three types of downlink transmission beams (DL Tx beams), such as a type 1 DL Tx beam (s) for broadcast, a type 2 DL Tx beam (s) for multicast/groupcast, and a type 3 DL Tx beam (s) for unicast, may be defined to be configured for a repeater. Alternatively, two types of downlink transmission beams (DL Tx beams), such as a type 1 DL Tx beam (s) for broadcast/multicast/groupcast and a type 2 DL Tx beam (s) for unicast may be defined for classification and configuration.

For a repeater, information about the number of reception beams (Rx beams) supported in that repeater by the capability (information) signaling (capability signaling) or the pre-configured scheme is transmitted to the base station/network. Here, the number of reception beams (Rx beams) means the number of uplink reception beams (UL Rx beams).

In this case, beam indexing is performed for each uplink reception beam (UL Rx beam) according to the number of uplink reception beams (UL Rx beams) supported in the repeater. In other words, when a repeater supports N uplink reception beams (UL Rx beams), beam indexes (or beam ID) of 0, 1, 2, ... , N-1 may be respectively assigned to the uplink reception beams (UL Rx beams) supported in that repeater. However, the corresponding uplink reception beams (UL Rx beams) may be defined not separately but as paired with the downlink transmission beam indexes (DL Tx beam index) or the downlink transmission beam IDs (DL Tx beam IDs). In other words, when a repeater supports N downlink transmission beams (DL Tx beams), N uplink reception beams (UL Rx beams) may also be supported for the uplink reception (UL Rx). Therefore, the downlink transmission beam indexes (DL Tx beam indexes) and the uplink reception beam indexes (UL Rx beam indexes) are paired and defined as 0, 1, 2, ..., N-1.

The base station may transmit the control information about the Tx beam or the Rx beam for a repeater to the repeater. According to the disclosure, the base station's control information for the repeater will be called side control information (SCI). In other words, the control information transmitted from the base station to the repeater through the control link (C-link) for the control of the repeater will be referred to as the side control information (SCI).

When the SCI is configured for the Tx beam or Rx beam of a repeater, the SCI for the beam control of that repeater includes time interval assignment information along with the Tx beam index (or Tx beam ID) indication information or the Rx beam index (or Rx beam ID) indication information.

Specifically, the Tx beam index (or Tx beam ID) indication information may be configured by $\log_2 N$ bit(s) based on the number N of downlink transmission beams (DL TX beams) as described above. In this case, the DL Tx beam index indication information of the SCI has a 1:1 mapping relationship with the DL Tx beam index (or the downlink transmission beam ID) supported in the corresponding repeater. Alternatively, when the downlink transmission beams (DL Tx beams) are independently configured according to the cast types as described above, the downlink transmission beam (DL Tx beam) indication information may be configured with the corresponding beam type indication information and the downlink transmission beam (DL Tx beam) indication information of the corresponding type. For example, when the number of type 1 DL Tx beams for the broadcast and multicast/groupcast is N1, and the number of type 2 DL Tx beams for unicast is N2, the corresponding downlink transmission beam (DL Tx beam) indication information may be configured by the beam type indication information of 1 bit and the downlink transmission beam (DL Tx beam) indication information of $\log_2 \max(N1, N2)$ bit(s).

As another method, the transmission beam index (Tx beam index) indication information may be configured by $\log_2(N+1)$ bit(s) according to the number N of downlink transmission beams (DL Tx beams) as described above. In this case, the corresponding transmission beam index (Tx beam index) indication information may additionally indicate the repeater's discontinuous transmission (DTx), i.e., relaying off (where, the DL signal of the base station is not amplified and forwarded). In other words, a specific value (e.g., '0') of the corresponding transmission beam index (Tx beam index) indication information is defined to correspond to the indication of the corresponding repeater's DTx, and the other values may have a 1:1 mapping relationship with the DL Tx beam index (or downlink transmission beam ID) values of the corresponding repeater. Alternatively, even when the downlink transmission beams (DL Tx beams) are independently configured according to the cast types as described above, the downlink transmission beam (DL Tx beam) indication information may be configured with the corresponding beam type indication information and the downlink transmission beam (DL Tx beam) indication information of the corresponding type. Even in this case, it may be defined that the repeater' DTx indication is performed through the downlink transmission beam (DL Tx beam) indication information or the beam type indication information. For example, when the number of type 1 DL Tx beams for broadcast and multicast/groupcast is N1 and the number of type 2 DL Tx beams for unicast is N2, the corresponding downlink transmission beam (DL Tx beam) indication information is configured with the beam type indication information of 1 bit and the downlink transmission beam (DL Tx beam) indication information of $\log_2 \max(N1+1, N2+1)$ bit(s). In this case, the repeater DTx indication is performed through the corresponding downlink transmission beam (DL Tx beam) indication information of $\log_2 \max(N1+1, N2+1)$ bit(s). Alternatively, the beam type indication information may be configured with 2 bits to define a specific value (e.g., '0') of the beam type indication information to indicate the repeater's DTx.

In other words, the case where the beam indication information of the SCI and the discontinuous transmission (DTx) of the repeater or the relaying off information corresponding to the repeater's DTx are joint encoded for the indication using one information domain is included in the scope of the disclosure.

Alternatively, when the maximum number Nmax of downlink transmission beams (DL Tx beams) per repeater supported in the base station/cell may be defined, and thus the downlink transmission beam (DL Tx beam) indication information may be configured by $\log_2 Nmax$ bit(s). When the beam type is defined, the downlink transmission beam (DL Tx beam) of the repeater may be indicated with the beam type indication information and the corresponding downlink transmission beam (DL Tx beam) indication information of $\log_2 Nmax$ bit(s). Even in this case, the repeater DTx indication may also be performed through the downlink transmission beam (DL Tx beam) indication information as described above.

The uplink reception beam (UL Rx beam), i.e., the reception beam for the repeater to receive the uplink transmission from the UE may be indicated through the SCI, and the same method as that for the foregoing downlink transmission beam (DL Tx beam) indication information may be applied to the corresponding uplink reception beam (UL Rx beam) indication information.

The SCI for indicating the downlink transmission beam (DL Tx beam) or uplink reception beam (UL Rx beam) for a repeater in a base station may include the time interval assignment information along with the beam indication information, i.e., the downlink transmission beam (DL Tx beam) or the uplink reception beam (UL Rx beam) indication information. The time interval assignment information may be explicitly or implicitly indicated. As an explicit indication manner, a SCI includes a time interval allocation indication information domain in which the transmission based on the corresponding downlink transmission beam (DL Tx beam) or the reception based on the corresponding uplink reception beam (UL Rx beam) are performed along with the downlink transmission beam (DL Tx beam) or uplink reception beam (UL Rx beam) indication information. In this case, the time interval assignment information domain may be slot assignment information or symbol assignment information, and may be configured with offset information and duration information, or with time domain resource assignment information based on a (pre-)configured time domain resource indication table defined or set up.

As an implicit manner, it may be defined to perform a change indication for the downlink transmission beam (DL Tx beam) or uplink reception beam (UL Rx beam) in units of SCI transmission without separate time interval indication information. In other words, it may be defined that the base station transmits only change indication information for the downlink transmission beam (DL Tx beam) or uplink reception beam (UL Rx beam) through the SCI, and thus the repeater changes the downlink transmission beam (DL Tx beam) or uplink reception beam (UL Rx beam) based on the change indication information for the downlink transmission beam (DL Tx beam) or uplink reception beam (UL Rx beam) in units of SCI transceiving period, i.e., SCI monitoring period for that repeater. In this case, the SCI including the corresponding beam change indication information may additionally include information about time offset in which the beam change is performed.

As another implicit time interval indication manner, it may be defined that a time granularity (or time grid, time unit, etc.) is configured in units of SCI transceiving period or SCI monitoring period for the corresponding repeater, and thus the downlink transmission beam (DL Tx beam) or uplink reception beam (UL Rx beam) indication information is transmitted in units of corresponding time granularity. For example, the corresponding time granularity may be configured in units of slots or symbol groups, and a time domain boundary for indicating M beams may be configured based on the time granularity given within a SCI transceiving period or monitoring period. In this case, single SCI includes the downlink transmission beam (DL TX beam) indication information or uplink reception beam (UL Rx beam) indication information for each time granularity. In other words, the single SCI may include M pieces of beam indication information. Here, the time granularity may be asymmetrically given in the time domain. For example, when two time-granularities are configured in one slot, the time granularities may be configured in the form of (1 symbol, 13 symbols), (2 symbols, 12 symbols), or (3 symbols, 11 symbols), etc. In time-granularity configuration information for the beam indication, a single pattern may be pre-configured, or a plurality of patterns may be defined and configured and information about a pattern to be used in a repeater may be configured or indicated by the base station. For example, the base station may use higher layer signaling or SCI to configure or indicate the information about the pattern to be used in the repeater.

In addition, when the beam indication of the repeater is transmitted through the foregoing SCI, it may be defined to perform the indication for the downlink transmission beam (DL Tx beam) and uplink reception beam (UL Rx beam) through separate SCI. In this case, the beam indication information of the corresponding SCI may be defined to include an indication information domain for distinguishing between the indication information for the downlink transmission beam (DL Tx beam) and the indication information for the uplink reception beam indication (UL Rx beam). Alternatively, an SCI format for the downlink transmission beam (DL Tx beam) and a separate SCI format for uplink beam indication (UL beam indication) may be configured. When the separate SCI format is defined or configured, information about an SCI formation transmission period, a payload size, etc. for the downlink beam indication (DL beam indication) and information an SCI format transmission period, a payload size, etc. for the uplink beam indication (UL beam indication) may be configured or pre-configured based on downlink-uplink slot configuration (DL-UL slot configuration). The SCI format configuration information for the downlink beam indication (DL beam indication) and the configuration information for the uplink beam indication (UL beam indication) may be configured/indicated by the base station through the higher layer signaling, medium access control (MAC) control element (CE) signaling, or Layer1/Layer2 control signaling (L1/L2 control signaling).

Further, the time interval assignment information for the corresponding beam-based transmission (Tx) or reception (Rx) may be defined to be explicitly signaled along with the foregoing beam indication information. In this case, in a method where the time interval assignment information is configured in the base station and interpreted in the repeater, the time interval assignment information may be defined based on a logical downlink time domain index (logical DL time domain index) and a logical uplink time domain index (logical UL time domain index) by separately and logically indexing the downlink (DL) and uplink (UL) symbols or slots. In other words, the corresponding time interval assignment information may be defined to be based on the downlink (DL) symbol, the downlink (DL) slot, the uplink (UL) symbol, or the uplink (UL) slot according to whether the beam indication information of the corresponding SCI is the downlink transmission beam (DL Tx beam) indication information or the uplink reception beam (UL Rx beam) indication information. Specifically, in the case where the downlink transmission beam (DL Tx beam) indication is performed through a SCI, the corresponding time interval allocation may be defined to be performed only for the downlink (DL) symbol and slot when the corresponding time interval assignment information is configured in the base station and interpreted in the repeater. In other words, the time/timing offset information, the time domain resource assignment information, or the like may be defined to be logically configured and interpreted for only the downlink (DL) symbols and the downlink (DL) slots. Likewise, the uplink reception beam (UL Rx beam) indication may be performed through a SCI. In this case, when the corresponding time interval assignment information is configured in the base station, the time/timing offset information, the time domain resource assignment information or the like may be defined to be logically indicated and interpreted for only the uplink (UL) symbol and the uplink (UL) slot. Alternatively, the time domain indexing for the time interval allocation may be defined to be performed commonly for both downlink (DL)-uplink (UL). In other words, the indexing for the time resource is logically performed regardless of whether the symbol or slot of a frame is the downlink (DL) or the uplink (UL), and the time interval allocation may be defined to be performed based on such an absolute time interval index.

When the beam indication of the repeater is transmitted through the SCI, the indication for the downlink transmission beam (DL Tx beam) and the indication for the uplink reception beam (UL Rx beam) may be defined to be performed through the single SCI. For example, when the foregoing time interval assignment information is implicitly performed, the beam indication may be performed in units of SCI transmission period or in units of any time granularity within the SCI transmission period. In this case, both the downlink (DL) slot or symbol and the uplink (UL) slot or symbol may be present in the corresponding SCI transmission period, and the downlink transmission beam (DL Tx beam) indication to be used in the downlink (DL) symbol/slot and the uplink beam (UL beam) indication to be used in the uplink (UL) the symbol/the slot may be performed through the single SCI.

Specifically, when the beam indication is performed in the form of beam change indication in units of SCI transmission period, the SCI include a DL beam (change) indication information domain and a UL beam (change) indication information domain. When both the downlink (DL) symbol/slot and the uplink (UL) symbol/slot are present in a time interval domain where the beam indication information is performed through a SCI (i.e., an SCI transmission period-based time interval domain), the downlink transmission beam (DL Tx beam) in the downlink (DL) symbol/slot is determined based on the corresponding DL beam (change) indication information, and the uplink reception beam (UL Rx beam) in the uplink (UL) symbol/slot is determined based on the corresponding UL beam (change) indication information.

Alternatively, any time granularity for the beam indication may be defined within the foregoing SCI transmission period, and thus the beam indication may be performed in units of time granularity. In this case, each piece of beam indication information is configured and transmitted in units of time granularity through the single SCI, and, at this time, the corresponding beam information is indicated and interpreted as the downlink transmission beam (DL Tx beam) when the corresponding time granularity belongs to the downlink (DL) symbol/slot, and indicated and interpreted as the uplink reception beam (UL Rx beam) when the corresponding time granularity belongs to the uplink (UL) symbol/slot. Here, in terms of defining the time granularity to be used as the unit of the foregoing beam indication, separate time granularity may be defined according to whether any slot is an uplink slot (UL slot) or a downlink slot (DL slot) or a mixed slot (where a DL symbol, a UL symbol or a flexible symbol is mixed).

The disclosure may be applied independently, or may be operated as combined in any form. Further, when the term used in the disclosure is a new term, any name for easy understanding has been used, and thus the disclosure may be applied even when another term having actually the same meaning is used.

**<Summary of Embodiments>**

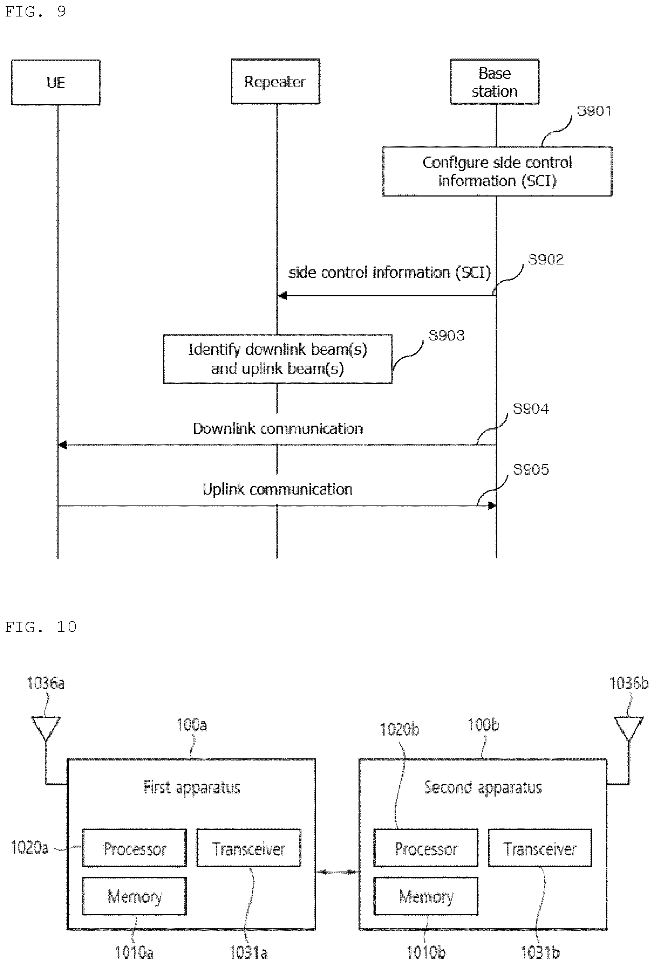

**FIG. 9 illustrates operations of a base station, a repeater and a UE according to an embodiment of the disclosure.**

Referring to FIG. 9, the base station configures the side control information (SCI) for the repeater (S901). In other words, the base station may configure information about the Tx beam and/or the Rx beam for controlling the repeater. Here, the Tx beam refers to a downlink beam, and the Rx beam refers to an uplink beam.

After configuring the side control information for the corresponding repeater, the base station transmits the configured side control information to the corresponding repeater through the control link (C-link) (S902). The side control information may include identification information for identifying the downlink beam and the uplink beam. The identification information may be beam index information or beam ID information, and be the same for both the downlink beam and the uplink beam. In other words, the beam index information and/or beam ID information for identifying the downlink beam and the uplink beam may have the same information, i.e., the same value for the downlink beam and the uplink beam. In addition, the downlink beam and the uplink beam having the same beam index and/or beam ID are associated by being paired each other.

Further, the side control information configured by the base station and transmitted to the repeater may further include time resource assignment information related to at least one of the downlink beam and/or the uplink beam. Here, time resource assignment information may include offset information and duration information, and the offset information and the duration information may be information associated with at least one of the slot and the symbol. In addition, time resource assignment information may be based on a time resource list. In other words, a time domain resource indication table may be (pre-)configured, and time domain resource assignment, i.e., time resource assignment information may be configured based on the time domain resource indication table and indicated to the repeater.

Further, the side control information configured by the base station and transmitted to the repeater may be used to indicate ON/OFF of the repeater. For example, a specific value included in the side control information may be used to indicate ON/OFF of the repeater by an explicit or implicit manner.

The repeater identifies the downlink beam and the uplink beam based on the side control information received from the base station (S903). The identification of the downlink beam and the uplink beam is based on the beam index information and/or the beam ID information included in the side control information.

After the downlink beam and the uplink beam are identified by the repeater, downlink communication using the downlink beam and the uplink communication using the uplink beam are performed among the base station, the repeater, and the UE (S904 and S905). When the downlink communication and/or the uplink communication is performed among the base station, the repeater, and the UE, the side control information including the foregoing time resource assignment information and the like may be used.

Meanwhile, the downlink reception using the downlink beam of the UE may be performed on a first link between the UE and the repeater, and the uplink transmission using the uplink beam may also be performed on the first link. The first link between the UE and the repeater may be referred to as the access link or forwarding link (F-link). On the other hand, the side control information is transceived through a second link between the base station and the repeater, and the second link may be referred to as the control link (C-link).

**<Apparatuses to which the Disclosure is applicable>**

The disclosure described up to now may be implemented through various means. For example, the disclosure may be implemented by hardware, firmware, software, or a combination thereof. Details will be described with reference to the accompanying drawings.

**FIG. 10 shows apparatuses according to an embodiment of the disclosure.**

Referring to FIG. 10, a mobile communication system may include a first apparatus 100a and a second apparatus 100b.

The first apparatus 100a may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a, and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

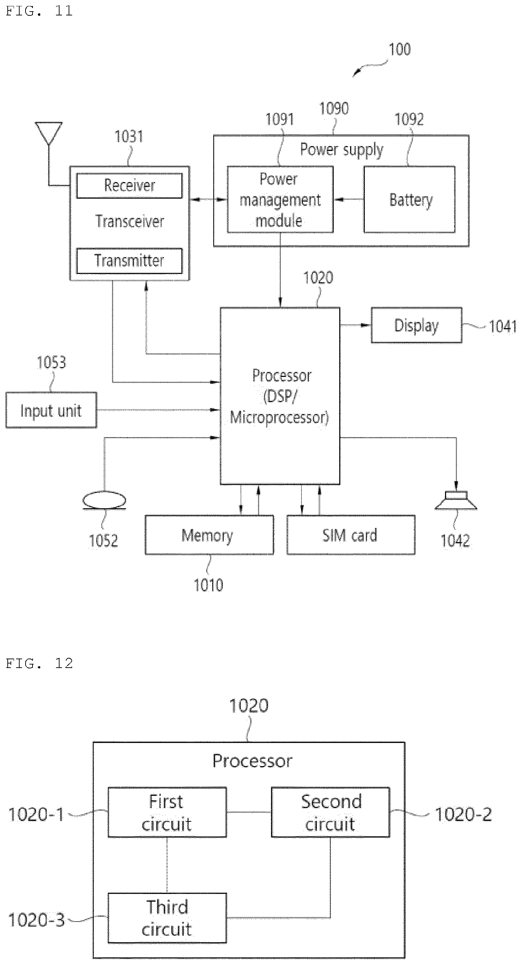

**FIG. 11 is a block diagram showing a configuration of a UE according to an embodiment of the disclosure.**

In particular, FIG. 11 illustrates the foregoing apparatus of FIG. 10 in more detail.

The apparatus includes a memory 1010, a processor 1020, a transceiving unit 1031, a power management module 1091, a battery 1092, a display 1041, an input unit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel®, KIRIN™ series of processors made by HiSilicon®, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 12 is a configuration block diagram of a processor in which the disclosure is implemented.**

As can be seen with reference to FIG. 12, a processor 1020 in which the disclosure of the present specification is implemented may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP), and may include at least one of a digital signal processor (DSP), a central processing unit (CPU), and a graphics processing unit (GPU).

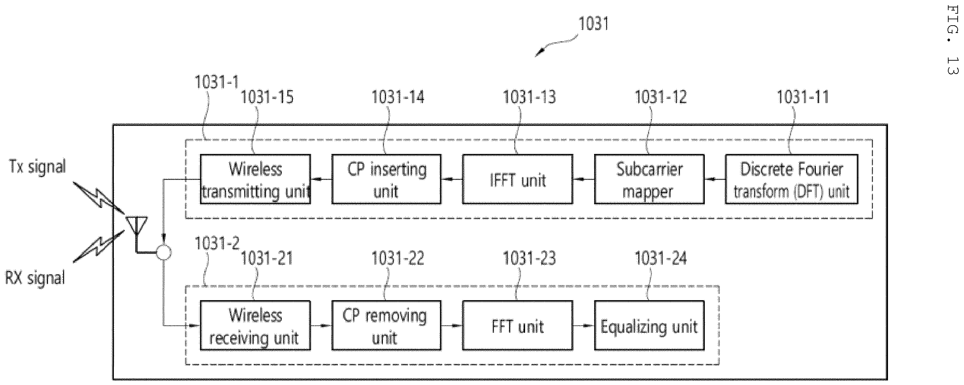

**FIG. 13 is a detailed block diagram of a transceiver of a first apparatus shown in FIG. 10 or a transceiving unit of an apparatus shown in FIG. 11.**

Referring to FIG. 13, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the disclosure, beam control information of a repeater is efficiently transceived in a mobile communication system, and thus the transceiving based on the beam is efficiently performed between a UE and the repeater.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

**Claims**

1. A method for a user equipment (UE) to communicate with a repeater in a mobile communication system, the method comprising:

   performing downlink reception using a downlink beam on a first link between the UE and the repeater; and
   performing uplink transmission using an uplink beam on the first link,
   wherein the downlink beam and the uplink beam are associated with each other by identification information for identifying the downlink beam and the uplink beam, and
   wherein the identification information is configured by side control information from a base station through a second link between the repeater and the base station.

2. The method of claim 1, wherein the identification information comprises beam index information, and the beam index information is same for both the downlink beam and the uplink beam.

3. The method of claim 2, wherein the downlink beam and the uplink beam are associated by being paired each other.

4. The method of any one of claims 1 to 3, wherein the side control information further comprises time resource assignment information related to at least one of the downlink beam and the uplink beam.

5. The method of claim 4, wherein the time resource assignment information comprises offset information and duration information, and the offset information and the duration information are related to at least one of a slot and a symbol.

6. The method of claim 4 or 5, wherein the time resource assignment information is based on a time resource list.

7. The method of any one of claims 1 to 6, wherein the side control information indicates ON/OFF of the repeater.

8. A method for a base station to control a repeater in a mobile communication system, the method comprising:

configuring side control information (SCI) for the repeater; and
transmitting the configured SCI to the repeater through a control link,
wherein the SCI comprises identification information for identifying a downlink beam and an uplink beam.

9. The method of claim 8, wherein the identification information comprises beam index information, and the beam index information is same for both the downlink beam and the uplink beam.

10. The method of claim 9, wherein the downlink beam and the uplink beam are associated by being paired each other.

11. The method of any one of claims 8 to 10, wherein the side control information further comprises time resource assignment information related to at least one of the downlink beam and the uplink beam.

12. The method of claim 11, wherein the time resource assignment information comprises offset information and duration information, and the offset information and the duration information are related to at least one of a slot and a symbol.

13. The method of any one of claims 11 or 12, wherein the time resource assignment information is based on a time resource list.

14. The method of any one of claims 8 to 13, wherein the side control information indicates ON/OFF of the repeater.

15. A communication apparatus in a mobile communication system, comprising:

at least one processor; and
at least one memory configured to store instructions, and operably and electrically connectable to the at least one processor,
wherein operations, performed based on the instructions executed by the at least one processor, comprising:

performing downlink reception using a downlink beam on a first link between the communication apparatus and a repeater, and
performing uplink transmission using an uplink beam on the first link,
wherein the downlink beam and the uplink beam are associated with each other by identification information for identifying the downlink beam and the uplink beam, and
wherein the identification information is configured by side control information from a base station through a second link between the repeater and the base station.

FIG. 1

FIG. 2

| | One Frame (10ms) | |
|---|---|---|

| | Half-Frame (5ms) | Half-Frame (5ms) | |
|---|---|---|---|

| | Subframe 0 (1ms) | Subframe 4 (1ms) | Subframe 5 (1ms) | Subframe 9 (1ms) | |
|---|---|---|---|---|---|

Subframe (1ms)

**15KHz**
| Slot 0 (14symbols) |
|---|

1ms

**30KHz**
| Slot 0 (14symbols) | Slot 1 |
|---|---|

500us

**60KHz**
| Slot 0 (14symbols) | Slot 1 | Slot 2 | Slot 3 |
|---|---|---|---|

250us

**120KHz**
| Slot 0 (14symbols) | Slot 1 | Slot 2 | Slot 3 | Slot 4 | Slot 5 | Slot 6 | Slot 7 |
|---|---|---|---|---|---|---|---|

125us

FIG. 3A

EPC

5G Core

LTE/LTE-A

NR

FIG. 3B

EPC

5G Core

LTE/LTE-A

NR

FIG. 3C

EPC

5G Core

LTE/LTE-A

NR

FIG. 4

FIG. 5

FIG. 6

FIG. 7

FIG. 8A

FIG. 8B

FIG. 9

FIG. 10

FIG. 11

FIG. 12

FIG. 13

Europäisches
Patentamt

European
Patent Office

Office européen
des brevets

# EUROPEAN SEARCH REPORT

**Application Number**

**EP 23 16 9399**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/053486 A1 (ABEDINI NAVID [US] ET AL) 17 February 2022 (2022-02-17) * paragraphs [0007], [0142], [0182] – [0187], [0201] – [0202]; figure 9 * ----- | 1-15 | INV. H04B7/155 ADD. H04B7/06 H04B7/08 |

TECHNICAL FIELDS
SEARCHED (IPC)

H04B

The present search report has been drawn up for all claims

| Place of search | Date of completion of the search | Examiner |
|---|---|---|
| Munich | 5 September 2023 | El Hajj Shehadeh, Y |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 9399

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2023

| Patent document cited in search report | | Publication date | Patent family member(s) | | Publication date |
|---|---|---|---|---|---|
| US 2022053486 | A1 | 17-02-2022 | CN | 116097581 A | 09-05-2023 |
| | | | EP | 4197121 A1 | 21-06-2023 |
| | | | US | 2022053486 A1 | 17-02-2022 |
| | | | WO | 2022035528 A1 | 17-02-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220051082
- KR 1020230049202